# EUROPEAN PATENT SPECIFICATION

(11) **EP 1 467 556 B1**
(45) Date of publication and mention of the grant of the patent: **26.10.2011**
(21) Application number: 04252103.9
(22) Date of filing: 08.04.2004
(51) Int. Cl.: H04N 1/60

(54) **Method, apparatus and program for image processing capable of producing high-quality achromatic images**
Verfahren, Vorrichtung und Programm zur Erzeugung achromatischer Bilder hoher Qualität
Procédé, appareil et programme de traitement d'image pour produire des images achromatiques de haute qualité

(30) Priority: 11.04.2003 JP 2003108018
(43) Date of publication of application: 13.10.2004
(73) Proprietor: Ricoh Company, Ltd., Yokohama-shi, Kanagawa 222-8530 (JP)
(72) Inventor: Ishihara, Hiroshi, Tokyo 143-8555 (JP)
(74) Representative: White, Duncan Rohan

(56) References cited:
- US-A- 5 596 355
- US-A- 6 116 720
- US-A1- 2002 176 105
- PATENT ABSTRACTS OF JAPAN vol. 1995, no. 10, 30 November 1995 (1995-11-30) & JP 07 184075 A (RICOH CO LTD), 21 July 1995 (1995-07-21)

## Description

This application claims priority to Japanese patent application No. 2003-108018 filed on April, 11, 2003 in the Japan Patent Office.

The present invention relates to image data processing, and more particularly to a method, apparatus, and program for image processing, and a medium storing the program, capable of selecting a proper colour converting condition for an achromatic pixel, thereby increasing the quality of output image.

### DISCUSSION OF THE BACKGROUND

An image processing apparatus, like a printer, for example, for generating graphic data according to picture description instructions (PDI) based on full-coloured image data carries out, in a process of generating graphic data from RGB data representing an original image, colour conversion to generate CMYK data used for colour printing. For the colour conversion, there has been used two converting methods of processing achromatic colour, i.e., gray colour including white and black colours, depending on a drawing method. In a case of performing colour printing of a page including text, graphs, or photographs, like a business document, for example, it is preferable that the gray colour used in text or a graph is printed with K (black) coloured material, and the gray colour used in a photograph image is printed with mixed material of CMYK (cyan, magenta, yellow, and black) colours. Accordingly, a type of a conversion is determined between using a K monochrome colour and CMYK four colours, corresponding to a type of the graphics. When gray coloured graphics in text or a graph is printed with four-coloured material, it tends to be too thick. Consequently, in such a case, a laser printer may introduce an undesirable effect like blur caused by toner shattering, while an ink jet printer may introduce paper misdirection or glaze caused by usage of an abundance of ink, for example. On the other hand, printing graphics in the photograph image generates other problems as it needs to be processed with consideration of gradation. When a gray coloured area is printed with the K monochrome material, a boundary of the gray coloured area and a chromatic coloured area may become too obvious to be discriminated and patchy, thereby decreasing the quality of the image. This is because that the two types of areas are printed with different types of materials, that is, the K monochrome and the CMYK four colours.

Japanese Patent Laid-Open Application Publication No. 9-27915 and Japanese Patent Laid-Open Application Publication No. 7-184075 describe techniques for eliminating deterioration of the image quality caused by the above reasons. Japanese Patent Laid-Open Application Publication No. 9-27915 describes a technique which determines whether an area is gray coloured or not by checking colour components in an image area of an identical colour in image data to be converted, and adopts gray processing performing colour conversion with a K monochrome converting condition to the data determined as gray. It is also described that when a type of the image area (graphics object) is determined as other than text, the gray processing is not adopted to the area. In addition, it is described that a criterion of the check can be changed depending on the type of the area. In the above technique described in Japanese Patent Laid-Open Application Publication No. 9-27915, for example, once the type of the area of the image data to be processed is known, it is possible to perform, as a corresponding process to the type of the area, the gray processing on text data using the K monochrome colour only. It is able to identify a type of an object, like text, graph, or photograph, on a language level for page-description language (PDL) for printers from various manufacturers based on Windows graphical device interface (GDI), PostScript, for instance. It is therefore possible to adopt the gray process, that is, to perform colour conversion with the K monochrome converting condition to the area in accordance with its identified type, thereby reducing deterioration of the image generally caused by the gray process as described in the above.

Japanese Patent Laid-Open Application Publication No. 7-184075 allows to change a threshold value used in monochrome determination for each component data of an input coloured image in order to adopt an optimum criterion for determining a type of an original document, thereby generating a high-quality image.

The above techniques need to identify a data type in order to determine a type of an area to be processed. The techniques do not intend to handle full coloured image data, for example, image data from a digital camera, or image data generated with a scanner by scanning original data including mixed materials of text, photographs, or graphics, without any information for identifying a type of contents. It is preferable that the image data without any type identification to converting it into graphics data, CMYK data, for example, is processed with an achromatic processing, in order to prevent deterioration of the image quality. It is also desirable to provide the above function in a simple method, without introducing additional hardware like an Application-Specific Integrated Circuit (ASIC) chip.

US 6116720 discloses an inkjet recording method and apparatus for preventing color boundary blur. When a black image is adjacent to a colour image, the black image is formed by using a first black ink, and when the black image is not adjacent to a colour image, the black image is formed using the second black ink.

JP 07 184075 relates to a color image processor comprising a chromatic colour area deciding means, which decides if a picture element is chromatic or achromatic.

US 2002/0176105 discloses an image processing apparatus which simplifies the circuit arrangement required for edge emphasis correction.

US 5596355 relates to a dot judgement circuit that judges whether colour information is present in dot-pattern-developed image data of pixels around a black pixel under attention. If color information is found, a slow drying black ink is selected.

### SUMMARY OF THE INVENTION

In view of the foregoing, it is an object of the present invention to provide a novel image processing apparatus which improves the quality of an output image including chromatic colour.

Another object of the present invention is to provide a novel image processing method which improves the quality of an output image including chromatic colour.

Another object of the present invention is to provide a novel computer program product stored on a computer readable storage medium which, when run on an image processing apparatus, carries out an image processing method which improves the quality of an output image including chromatic colour.

Another object of the present invention is to provide a novel computer readable medium that stores computer instructions for performing an image processing method which improves the quality of an output image including chromatic colour.

Another object of the present invention is to provide a novel printer controller installed in an image forming apparatus and storing computer instructions for performing an image processing method which improves the quality of an output image including chromatic colour.

Another object of the present invention is to provide a novel printer driver installed in a hosting computer and storing computer instructions for performing an image processing method which improves the quality of an output image including chromatic colour.

To achieve these and other objects, in one example, the present invention provides a novel image processing apparatus in accordance with claim 1.

Further, in one embodiment, a novel image processing method for generating graphics data in accordance with claim 9 is provided.

Further, in one embodiment, a computer program product stored on a computer readable storage medium in accordance with claim 17 is provided.

### BRIEF DESCRIPTION OF THE DRAWINGS

A more complete appreciation of the disclosure and many of the attendant advantages thereof will be readily obtained as the same becomes better understood by reference to the following-detailed description when considered in connection with the accompanying drawings, wherein:
Fig. 1 is a block diagram showing an exemplary configuration of a printer according to an embodiment of the present invention;
FIG. 2 is a diagram illustrating a first principle for determining a converting condition by checking whether a pixel has a property of a photographic image;
FIG. 3 is a diagram illustrating a second principle for determining the converting condition by checking whether the pixel has the property of the photographic image;
FIG. 4 is a diagram illustrating a third principle for determining the converting condition by checking whether the pixel has the property of the photographic image;
Fig. 5 is a flowchart showing an exemplary procedure of image data processing according to exemplary embodiment of the present invention;
FIG. 6 is a flowchart showing detailed steps of a chromatic determination step in the exemplary procedure shown in FIG. 5;
FIG. 7 is a flowchart showing detailed steps of a photograph image property checking step in the exemplary procedure shown in FIG. 5; and
FIG. 8 is a flowchart showing detailed steps of a colour converting condition designating step in the exemplary procedure shown in FIG. 5.

### DETAILED DESCRIPTION OF PREFERRED EMBODIMENTS

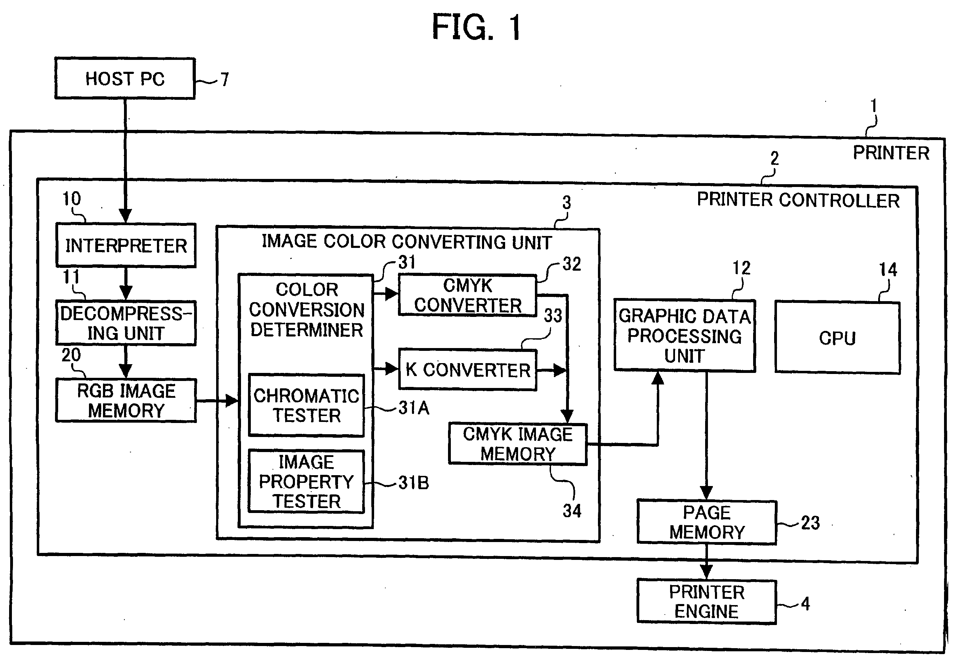

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, particularly to FIG. 1, a printer 1 as an image processing apparatus according to an exemplary embodiment of the present invention is described. In Fig. 1, the printer 1 includes a printer controller 2 and a printer engine 4. The printer controller 2 includes an image colour converter 3, an interpreter 10, a decompressing unit 11, a graphic data processing unit 12, a CPU 14, an RGB image memory 20, and a page memory 23. The image colour converting unit 3 includes a colour conversion determiner 31, a CMYK converter 32, a K converter 33, and a CMYK image memory 34. The colour conversion determiner 31 includes a chromatic tester 31A and an image property tester 31B. FIG. 1 also shows a host PC 7 outside the printer 1.

In a process of generating graphics data according to picture description instructions (PDI) based on full-coloured image data, the embodiments described below enable to select a colour converting condition, to be applied to a target pixel determined as achromatic, from a K monochrome converting condition using a K (black) colour and a normal converting condition using CMYK (cyan, magenta, yellow, and black) four colours. The converting condition is selected according to a type of the target pixel of original source image data, thereby increasing the quality of the output image. The embodiments use a generalized printer system, that is, a system including the printer 1 for carrying out printing operations based on a printing command sent from a hosting computer, in order to describe examples of graphics processing according to the present invention. In order to process graphics data at the side of the printer, the printer controller 2 may take charge of it as in some of existing laser printers. Alternatively, a printer driver may be installed with functions necessary for performing the above process at the side of the hosting computer, as in some of existing ink-jet printers. In cases of using the printer controller 2 or the printer driver to perform the process, a computer for driving them, i.e., a central processing unit (CPU), may include a program for carrying out required functions.

The present embodiment describes a basic method of specifying a type of a colour conversion of achromatic coloured pixel, aiming to improve the quality of an output image to be printed. In the colour conversion of achromatic colour, a converting condition is selected between the K monochromatic converting condition and the normal converting condition using CMYK four colours, according to a characteristic of a pixel in original image data. A type of printed material handled with the embodiment is a business document including mixed materials of text, graphics, photographs, and so forth, for example. The embodiment aims to improve the quality of such a document by printing black coloured text or a ruled line of the graph with K monochrome colour in order to make its appearance clear, and printing gray coloured pixels in a part of a photograph image with CMYK colours in order to keep gradation seriality of the pixel to ambient pixels. The printer controller 2 in the printer 1 shown in FIG. 1 receives a printing command from a host device, the host PC 7 in this example, processes data as needed in order to perform printing operation according to the printing command, and controls several units in the printer 1. The printer engine 4 receives image data output from the printer controller 2 to print out the image onto a medium such as a sheet of paper. In order to process the input printing command to generate graphics data to be output to the printer engine 4, the printer controller 2 is provided with the interpreter 10, the decompressing unit 11, the image colour converting unit 3, and the graphics data processing unit 12. The printer controller 2 is also provided, in order to store data during data processing steps, with the RGB image memory 20, the CMYK image memory 34, the page memory 23, and the CPU 14. In a case that hardware implements the interpreter 10, the decompressing unit 11, the image colour converting unit 3, and the graphics data processing unit 12, these components are controlled by the CPU 14. When software implements the interpreter 10, the decompressing unit 11, the image colour converting unit 3, and the graphic data processing unit 12, the CPU 14 works to drive the software.

Operations of each component shown in FIG. 1 will now be described according to a procedure of processing the image data. The host PC 7 generates coloured image data, transmits a printing command based on the data in the PDL format, for example, to the printer controller 2 of the printer 1. In this exemplary embodiment, coloured image data generated in the host PC 7 as the original source data is in an RGB format. A printer driver (not shown) in the host PC 7 transmits the image data in the RGB format as it is without performing any conversion into a CMYK format. The coloured image data input into the printer controller 2 as the printing command is further input into the interpreter 10 for decoding PDL data or format to transformed into intermediate data which is transferred to the decompressing unit 11. The decompressing unit 11 sequentially processes the intermediate data, like a decoding of compressed colour image data as needed, thereby expanding the intermediate data into a bitmap format and storing it into the RGB image memory 20. The RGB image data is input into the image colour converting unit 3 to be converted into the CMYK format for printing. The image colour converting unit 3 is able to use several converting conditions. A converting condition to be used is selected according to designation. In the image colour converting unit 3, the colour conversion determiner 31 determines, for the RGB bitmap data decompressed and stored in the RGB image memory 20, a colour converting condition applied by pixel. Detailed functions of the colour conversion determiner 31 will be described later.

In this embodiment, two types of colour converting conditions are possible as follows; first, a K monochrome converting condition performed with the K converter 33 using the K colour without CMY colours, and second, a normal converting condition performed with the CMYK converter 32 using CMYK four colours. The K monochrome converting condition is applied when an RGB of input pixel is determined as achromatic. An output of the K monochrome converting condition is printed with K coloured material alone. The converting condition adopts "K=1.0―R" and "C=M=Y=0.0", for example. In the CMYK converting condition which uses materials of CMYK four colours for printing, each colour may be calculated by using a method generally known as black generation (BG) and/or under colour removal (UCR). In a colour conversion of a pixel determined as achromatic, either one of the K monochrome converting condition or the CMYK four colours converting condition is applied according to the specification from the colour conversion determiner 31. After the colour conversion, the CMYK image data is temporarily stored into the CMYK image memory 34. The graphics data processing unit 12 uses the data in the CMYK image memory 34 to expand graphics by each of the CMYK colours and write resultant data into the page memory 23. Upon completion of processing the PDI in one page according to the above described graphics processing, the data stored in the page memory 23 is sent to the printer engine 4 and the image is printed out onto a recording medium like a sheet of paper.

The detailed functions of the colour conversion determiner 31 will now be described. The colour conversion determiner 31 determines which converting condition is applied between the K monochrome and the CMYK four colours for an achromatic coloured data to be converted by pixel, and causes the K converter 33 or the CMYK converter 32, depending on determination result, to convert the data. The colour conversion determiner 31 in this embodiment carries out two checking steps. First step is achromatic checking to determine whether the pixel is achromatic or chromatic, performed with the chromatic tester 31A. Second step is, if the pixel is determined as achromatic, checking whether the pixel has a characteristic of a pixel in a photograph image, performed with the image property tester 31B. According to the results of the above checking steps, the colour conversion determiner 31 assigns the CMYK four colours conversion to the pixel when the pixel is achromatic and has the characteristic of the photograph image. When the pixel is achromatic but do not have the characteristic of the photograph image, the colour conversion determiner 31 assigns the K monochrome converting conversion to the pixel. When the pixel is determined as chromatic, the CMYK four colours converting condition is immediately applied. Since the chromatic checking needs to be performed on each pixel, image data having RGB components corresponding to each pixel, like an image generated with a digital camera or a scanner, can be processed without any difficulty. On the other hand, it is unable for the chromatic checking to directly process image data with no pixel-based data, like text data in PDL format or raster graphics data. To solve the problem, a drawing object like text or graphics specified with the PDI is decompressed based on colour specification data for the object into the bitmap format before the chromatic checking is performed on a pixel basis, as described above.

In the chromatic checking, a pixel not satisfying a criterion for an achromatic colour, i.e., a gray colour including white and black colours, is determined as achromatic. When the pixel cannot be determined as achromatic, it is determined as chromatic. In this embodiment, the criterion for the chromatic colour is whether values of components of input RGB are identical, i.e., whether "R=G=B" is satisfied or not. When the pixel is determined as achromatic by satisfying "R=G=B", the pixel is further examined whether it has the characteristic of the photographic image. Information necessary for this examination is easily obtained when an image type is specified and indicates that the data is the photograph image. For example, it is possible to have a user operate a key or the like for specifying the type of the image data, thereby detecting the image type according to an operational input. It is also possible to detect whether the pixel needs to be processed as photograph data by examining area information for a drawing object indicated in the PDI. This can be examined by checking for a specification of a photograph object in a decoding result of the PDI which is generally used and described in PDL, since the PDI is expected to include the drawing object of text, graphics, or a photograph image.

Another embodiment based on the previous embodiment will now be described. The previous embodiment determines a pixel as achromatic when values of RGB components are identical satisfying the condition "R=G=B", i.e., the pixel has no colour saturation. According to this criterion, however, very small colour saturation unrecognizable under human eyes causes the pixel to be determined as chromatic. For example, colour calculation may have an error which may generate micro colour saturation in a pixel which is originally achromatic. When such a pixel exists in a gradation area, the pixel is not regarded as achromatic but chromatic, thereby causing unevenness in output of the gradation area. In a case of using a format adopting a nonreversible compression method such as JPEG, it is also possible that a calculation process of compressing or decompressing causes alternation of the achromatic colour into the chromatic colour, thereby resulting in deterioration of the image quality. Furthermore, this undesirable interpretation may also occur in an image generated with the scanner or the digital camera. In normalizing RGB data with dependence of device characteristics into an integer value within a range of 0 to 255, for example, an achromatic original colour may be regarded as the chromatic colour. To avoid the above problem, the achromatic colour checking is configured to regard a very small colour range unrecognizable under human eyes as achromatic, thereby preventing deterioration and improving the image quality. In specific, a colour of R≈G≈B including a micro chromatic colour unrecognizable under human eyes is determined as achromatic. In order to make this determination, a threshold value is applied to a difference between optional two colours of the RGB. That is, the RGB is determined as achromatic when its components' values satisfy expressions |R-G| ≤Trg, |G-B| ≤Tgb, and |B-R| ≤Tbr wherein Ttg, Tgb, and Tbr represent the respective threshold values. The above expressions are used in an example based on an assumption that values of Trg, Tgb, and Tbr differ from each other according to characteristics of devices. It is also possible, as a matter of course, to assume "Trg=Tgb=Tbr" for the sake of simplicity.

Another exemplary embodiment according to the present invention will now be described. In the first embodiment above, the CMYK four colours converting condition is specified to a pixel when the pixel is determined as achromatic and has the characteristic of the photograph image which may be detected by checking the drawing object specified in the PDI. However, since this method depends on an assumption that the PDI includes the specified drawing object, it is not applicable in other cases where the assumption does not hold. To improve this, the present embodiment provides a method of checking image data of a whole page of full-coloured image data generated with the digital camera or the scanner without any specification of the drawing object for determining whether a pixel therein is for forming a photographic image or not. This embodiment checks a predetermined number of sequential pixels (n pixels) in a main scanning direction immediately preceding a target pixel in an original source image. When there exists any chromatic pixel in the n pixels, the target pixel is determined as a pixel of the photographic image. This method is suitable for raster original image data. In a case that the raster original image data is sequentially input as sequential pixels in the main scanning direction, and graphics data is generated by processing the sequential pixels, it is possible to check each pixel in the sequential pixels to determine whether the target pixel is for the photograph image or not with a simple configuration.

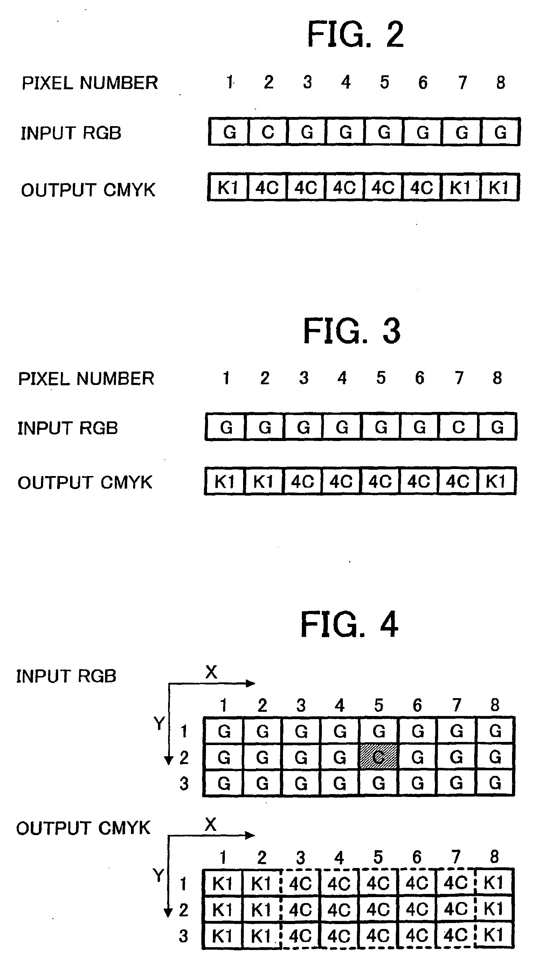

FIG. 2 shows an example of data including eight sequential pixels in the main scanning direction indicated with pixel numbers 1 through 8. An upper line shows exemplary results of the chromatic checking on input RGB pixels. G indicates that the pixel is achromatic, i.e., satisfies "R=G=B" or "R ≈G≈B", C indicates that the pixel is chromatic, i.e., not determined as achromatic. A bottom line shows colour conversion conditions assigned to input pixels according to values in the upper line based on a certain principle. K1 indicates the K monochrome converting condition using "K=1.0―R" and "C=M=Y=0.0", for example. 4C indicates the CMYK four colours converting condition using the BG/UCR to calculate four colours, for example. In this example, four preceding (past) pixels of the target pixel in the main scanning direction, n=4, in other words, are examined. In the example in FIG. 2, the 4C converting condition is applied when four pixels in the left of the target pixels include any chromatic pixel, and the K1 converting condition is applied when the four pixels includes no chromatic pixel. Specifically, since pixel 1 has achromatic (G) input RGB and has no chromatic (C) pixel in four past pixels, the K1 is applied for a conversion of the pixel 1. As an input of pixel 2 is chromatic (C), the 4C is immediately applied for a conversion of the pixel 2. Pixel 3 is achromatic (G) and have a chromatic (C) pixel, the pixel 2, namely, in preceding four pixels, so that the 4C converting condition is applied for its conversion. Checking results of pixels 4, 5, and 6 are similar to a result of the pixel 3. Since pixel 7 is achromatic (G) and has no C pixel in past four pixels, the pixel 7 is converted with the K1 converting condition. Checking result of pixel 8 is similar to a result of the pixel 7. According to the above principle, the CMYK four colours converting condition is specified to pixels regarded as forming the photograph image, that is, the pixels 3, 4, 5, and 6 in the above example. According to this principle, when all input RGB in the image data are G, all output CMYK thereof is converted with the K1 converting condition.

Another exemplary embodiment according to the present invention will now be described. This embodiment provides a method of checking a pixel in image data of a whole page of full coloured data. The image data is generated with the digital camera or the scanner, that is, does not have any specification of the drawing object for determining whether the pixel therein is the pixel for forming the photographic image to which the CMYK four colours converting condition needs to be specified. From this viewpoint, an object of this embodiment is similar to the one of the previous embodiment. This embodiment adopts a method of checking presence of the chromatic pixel in predetermined number of sequential pixels (n pixels) in the main scanning direction adjoining to the target pixel. This method checks immediately succeeding pixels to the target pixel, while the method in the previous embodiment checks the immediately preceding pixels. As the previous embodiment, this embodiment is also suitable for the raster original image data, allowing required checking operation with a simple configuration. Since this method checks succeeding pixels of the target pixel, the method additionally requires pre-reading of the input data. In some cases, the method may result in more effective output according to a condition of the input image.

FIG. 3 shows an example of data including eight sequential pixels in the main scanning direction indicated with pixel numbers 1 through 8. An upper line shows exemplary results of the chromatic checking on input RGB pixels. G indicates that the pixel is achromatic, i.e., satisfies "R=G=B" or "R ≈G ≈B", C indicates that the pixel is chromatic, i.e., not determined as achromatic. A bottom line shows colour conversion conditions assigned to input pixels according to values in the upper line based on a certain principle. K1 indicates the K monochrome converting condition using "K=1.0―R" and "C=M=Y=0.0", for example. 4C indicates the CMYK four colours converting condition using the BG/UCR to calculate four colours, for example. In this example, four preceding (past) pixels of the target pixel in the main scanning direction, n=4, in other words, are examined. In the example in FIG. 3, the 4C converting condition is applied when four pixels in the right of the target pixels include any chromatic pixel, and the K1 converting condition is applied when the four pixels includes no chromatic pixel. Specifically, since pixel 1 has achromatic (G) input RGB and has no chromatic (C) pixel in four succeeding pixels, the K1 is applied for a conversion of the pixel 1. Checking result of pixel 2 is similar to a result of the pixel 1. Pixel 3 is achromatic (G) and have chromatic (C) pixel, the pixel 7, namely, in succeeding four pixels, so that the 4C converting condition is applied for its conversion. Checking results of pixels 4, 5, and 6 are similar to a result of the pixel 3. As an input of pixel 7 is chromatic (C), the 4C is immediately applied for a conversion of the pixel 2. Since pixel 8 is achromatic (G) and has no C pixel in succeeding four pixels, the pixel 8 is converted with the K1 converting condition. According to the above principle, the CMYK four colours converting condition is specified to pixels regarded as forming the photograph image, that is, the pixels 3, 4, 5, and 6 in the above example. According to this principle, when all input RGB in the image data are G, all output CMYK thereof is converted with the K1 converting condition. By applying this embodiment together with the previous embodiment, it is possible to cover a predetermined number of pixels both preceding and succeeding the target pixel in the main scanning direction, in checking for a chromatic coloured pixel. A converting condition is specified to the pixel according to the procedure described above and the procedure in the previous embodiment.

Another exemplary embodiment according to the present invention will now be described. This embodiment provides a method of checking a pixel in image data of a whole page of full coloured data. The image data is generated with the digital camera or the scanner, that is, does not have any specification of the drawing object for determining whether the pixel therein is the pixel for forming the photographic image to which the CMYK four colours converting condition needs to be specified. From this viewpoint, an object of this embodiment is similar to the ones of the two previous embodiments. This embodiment adopts, in a similar manner as the previous two embodiments, a method of checking presence of the chromatic pixel in predetermined number of sequential pixels (n pixels) surrounding the target pixel. While the method in the second previous embodiment checks the preceding pixels to the target pixel and the method in the previous embodiment checks succeeding pixels, this method checks pixels in a predetermined area, for example, a 5x3 matrix of pixels surrounding the target pixel. When any chromatic (C) pixel exists in the matrix, the CMYK four colours (4C) converting condition is applied to the target pixel. By expanding an area for achromatic checking to a matrix formed with pixels adjoining the target pixel, the method in the embodiment is able to provide more adequate determination compared with the methods in the previous two embodiments.

FIG. 4 shows an example data including sequential pixels in a main scanning direction X numbered with 1 through 8 and in a sub scanning direction Y numbered with 1 through 3. An upper matrix shows exemplary results of the chromatic checking on input RGB pixels. G indicates that the pixel is achromatic, i.e., satisfies "R=G=B" or "R ≈G ≈B". C indicates that the pixel is chromatic, that is, the pixel is not determined as achromatic. In FIG. 4, the chromatic pixel exists at a coordinate of 5 and 2, a cell filled with hatching. A bottom matrix shows colour conversion conditions for input pixels determined according to values in the upper line based on a certain principle. K1 indicates the K monochrome converting condition using "K=1.0―R" and "C=M=Y=0.0", for example. 4C indicates the CMYK four colours converting condition using the BG/UCR to calculate four colours, for example. This embodiment adopts a principle that the chromatic checking is preformed on pixels in a matrix of 5x3 pixels surrounding the target pixel. The 4C conversion is applied to the target pixel when any chromatic pixel is found in the matrix, and the K1 conversion is applied when no chromatic pixel is found in the matrix. Specifically, in FIG. 4, a pixel at a coordinate of 5 and 2 is chromatic (C) and other pixels are achromatic (G). Accordingly, the 4C converting condition is applied to pixels having the C pixel (5,2) within surrounding 5x3 pixels, that is, pixels in an area indicated with a rectangle with dashed lines, i.e., (X,Y)=(3-7, 1-3). The K1 converting condition is applied to a pixel outside of the area since it does not have any chromatic (C) pixel within a surrounding 5x3 matrix. According to this principle, when all input RGB in the image data are G, all output CMYK thereof is converted with the K1 converting condition.

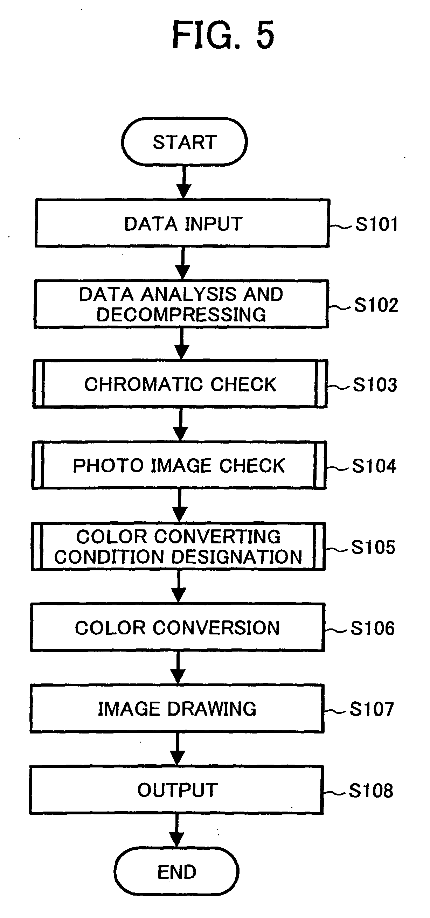

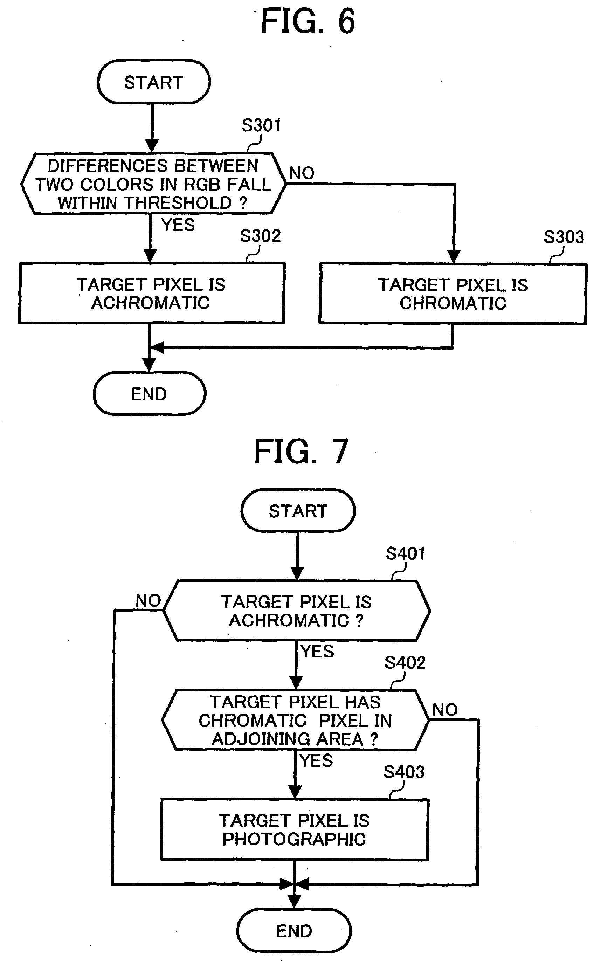

Referring now to FIGS. 5 through 8, a series of image processing operations according to the printer 1 of the present invention will now be described. Fig. 5 is a flowchart showing an exemplary procedure of image data processing according to the embodiment. In Step S101, the host PC 7 and the printer 1 initially establish communications via a communication interface, the printer controller 2 then launches a program for image data processing to receive the PDI from the host PC 7 to input data. The input PDI is such data described in a predetermined format or a language like PDL. Step S102 decodes the input data to generate graphics data as intermediate data, performing decompressing process, like decoding of colour image data as necessary, on the intermediate data to generate RGB bitmap data, and temporarily stores the RGB bitmap data into the RGB image memory 20. The decompressing process of generating the bitmap data is necessary for a subsequent step of specifying a colour converting condition to each pixel in the image data. In Step S103, the chromatic checking is performed on each of the pixels in the decompressed RGB bitmap data. In the chromatic checking, a pixel is determined as achromatic when its RGB components satisfy expressions |R-G| ≤Trg, |G-B| ≤Tgb, and |B-R| ≤Tbr. The pixel is determined as chromatic when its RGB components do not satisfy the above expressions. The threshold values Trg, Tgb, and Tbr may be set to predetermined values larger than zero, so that a colour including minimum chromatic colour unrecognizable under human eyes can be regarded as achromatic. It is also possible to configure as "Trg=Tgb=Tbr=0" or "R=G=B", naturally. FIG. 6 is a flowchart showing a subroutine of the chromatic checking step. Step S301 of the flowchart tests above expressions. When the expressions are satisfied, the result of Step S301 is YES and the operation goes to Step S302 to determine the target pixel as achromatic. When the result of Step S301 is NO, the operation goes to Step S303 to determine the target pixel as chromatic.

In Step S104, further checking is performed on the target pixel determined as achromatic to determine whether the target pixel has the characteristic of the pixel in the photographic image. When the target pixel determined as achromatic is further determined as the pixel of the photograph image, the CMYK four colours converting condition is applied to the target pixel. FIG. 7 is a flowchart showing a subroutine of Step S104 in FIG. 5, a photographic characteristic checking step. Step S401 checks whether the target pixel is achromatic or not by referring to the result of the chromatic checking step previously performed. When the target pixel is not achromatic, the result of Step S401 is NO and the operation exits this subroutine. When the target pixel is achromatic, the result of Step S401 is YES and the operation goes to Step S402 to check whether there exists any chromatic pixel in a predetermined area adjoining the target pixel. An embodiment of the photographic checking may vary according to the predetermined area which can be configured with the following four methods. A method A uses a predetermined number of sequential pixels immediately preceding to the target pixel in the main scanning direction, as shown in FIG. 2, for example. A method B uses a predetermined number of sequential pixels immediately succeeding to the target pixel in the main scanning direction, as shown in FIG. 3, for example. A method C uses a predetermined number of sequential pixels immediately preceding and succeeding to the target pixel in the main scanning direction, that is, a combination of the above two methods A and B. A method D uses a predetermined number of pixels surrounding the target pixel, as shown in FIG. 4, for example.

Among the above four methods, the method A handling preceding pixels of the target pixel has the simplest operations. The methods B, C, and D accordingly have less simple operations. Graphics data is basically processed in an inputting order, or in an order of lining in the main direction. The method B, C, and D need pre-reading in a line, and the method D further needs pre-reading of pixels in a next line to the target pixel, thereby requiring additional steps and making the process more complex. Among the four methods, accuracy appears in a reversal order of the simplicity. The method D can be the highest accuracy among the four methods in determining a photographic pixel as the method also checks pixels in adjoining lines of the target pixel. In addition to the pre-reading operation, the methods B, C, and D need to check a pixel in the predetermined area obtained with the pre-reading operation in advance to determine whether the pixel in the predetermined area is achromatic or not, that is, the chromatic checking process of Step S103. In FIG. 7, one of the four methods A through D is applied to specify the predetermined area of pixels to be checked. When there exists any chromatic pixel in the predetermined area, the result of Step S402 is YES and the operation goes to Step S403 to determine the target pixel is photographic and then exits the subroutine. When there exists no chromatic pixel in the predetermined area, the result of Step S402 is NO and the operation directly exits the subroutine.

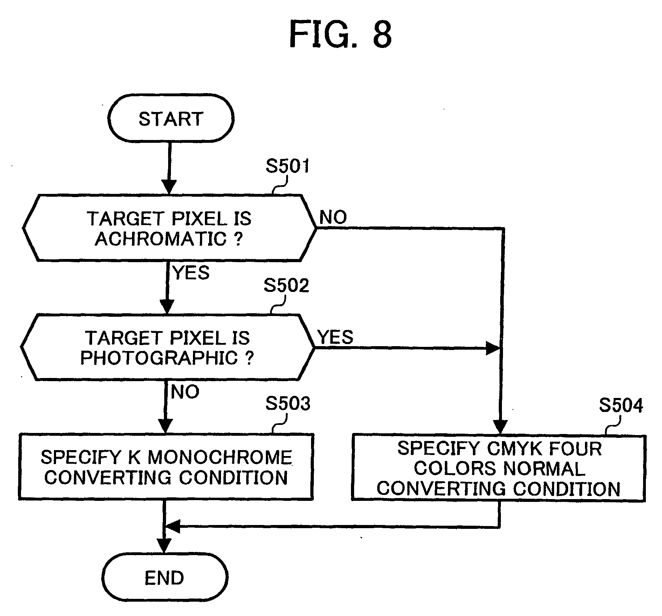

In Step S105, the colour converting condition is specified to the target pixel according to the checking result in the photographic checking step. In this embodiment, one of the K monochrome converting condition or the CMYK four colours converting condition is specified to the target pixel determined as achromatic. Whether the target pixel has the photographic characteristic or not determines the type of converting condition to be specified. When the target pixel is achromatic and photographic, the CMYK four colours converting condition is specified, like other chromatic pixels in the photograph image. This keeps gradation seriality among a plurality of adjoining pixels, thereby preventing unevenness at a border of a gray coloured area and a chromatic coloured area nearly equal to gray. When the target pixel of chromatic colour is in black coloured text or black coloured ruled lines of the graph, the K monochrome converting condition is applied in order to make an output image clear. FIG. 8 is a flowchart showing a subroutine of Step S105 in FIG. 5, a colour converting condition designating step. Step S501 in FIG. 8 checks whether the target pixel is achromatic or not by referring to the result of the chromatic checking step previously performed. When the target pixel is not determined as achromatic in Step S103, Step S501 results NO and the operation goes to Step S504. In Step S504, since the target pixel is regarded as chromatic, the CMYK four colours converting condition normally used for the full-coloured image data is designated to the target pixel. The operation then exits the subroutine. When the target pixel is achromatic, the result of Step S501 is YES and the operation goes to Step S502. Step S502 refers to the checking result of Step S 104 to check whether the target pixel is photographic or not. When the target pixel is photographic, the result of Step S502 is YES and the operation goes to Step S504. In Step S504, the CMYK four colours converting condition is designated to the target pixel which is regarded as an achromatic coloured pixel in the photograph image. The operation then exits the subroutine. When the target pixel is not regarded as photographic, the result of Step S502 is NO and the operation goes to Step S503. In Step S503, the K monochrome converting condition is designated to the target pixel which is regarded as achromatic, as a pixel in black text or ruled line of the graph, for example. The operation then exits the subroutine.

In Step S 106 in FIG. 5, colour conversion is performed on the target pixel according to the colour converting condition designated in the Step S105. In the embodiment, the K monochrome converting condition uses the K colour without CMY colours, that is, "K=1.0―R" and "C=M=Y=0.0", for example. The CMYK four colours converting condition uses the general BG/UCR colour conversion, for example. In Step S107, graphics data processing is performed on CMYK image data obtained by the colour conversion by pixel in Step S106. The process includes decompressing of the CMYK image data into bitmap data by each colour as writing the data generated into the page memory 23, using a dither pattern as a pseudo gradation process. Upon completion of processing the PDI in one page according to the above procedure, the operation goes to Step S 108. Step S108 outputs data of each of the CMYK colours stored in the page memory 23 to the printer engine 4 to print out the data onto a recording medium like a sheet of paper. Then the graphics data processing terminates.

This invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. The present invention may also be implemented by the preparation of application specific integrated circuits or by interconnecting an appropriate network of conventional component circuits, as will be readily apparent to those skilled in the art.

Numerous additional modifications and variations are possible in light of the above teachings. It is therefore to be understood that within the scope of the appended claims, the disclosure of this patent specification may be practiced otherwise than as specifically described herein.

## Claims

1. An image processing apparatus for designating a colour converting condition for original image data received as bitmap image data and colour converting said data, comprising:
a chromatic tester configured to determine whether a pixel of the original image data is chromatic or achromatic;
an obtainer configured to obtain an image property of the pixel by checking pixels in a predetermined area adjoining the pixel, the predetermined area comprising a predetermined number of sequential pixels;
a colour converter configured to convert the original image data into CMYK data for printing according to a predetermined converting condition; and
a converting condition designator configured to designate a type of the predetermined converting condition for the pixel determined as achromatic by said chromatic tester according to the image property obtained by said obtainer and to designate a normal converting condition using cyan, magenta, yellow and black colors if a pixel is determined as chromatic; wherein
the predetermined condition used for the pixel determined as achromatic is any one of a K monochrome converting condition using a black colour and the normal converting condition using cyan, magenta, yellow, and black colours; and
the image property of the pixel is either one of a first image property of including any chromatic pixel in the pixels in the predetermined area and a second property of not including any chromatic pixel in the pixels in the predetermined area, and said converting condition designator is configured to designate the normal converting condition using cyan, magenta, yellow and black colours to the pixel having the first image property and the K monochrome converting condition to the pixel having the second image property.

2. An image processing apparatus according to Claim 1, wherein said chromatic tester determines the pixel as achromatic when values of RGB colour components are identical to each other.

3. An image processing apparatus according to Claim 1, wherein said chromatic tester determines the pixel as achromatic when differences in data value among RGB components of the pixel fall within respective predetermined threshold values.

4. An image forming apparatus according to Claim 1, wherein said obtainer checks pixels in a predetermined area in the original image data to obtain the image property of the pixel.

5. An image forming apparatus according to Claim 1, wherein the predetermined number of sequential pixels of the predetermined area are immediately preceding the pixel in a main scanning direction.

6. An image forming apparatus according to Claim 1, wherein a predetermined number of sequential pixels of the predetermined area are immediately succeeding the pixel in a main scanning direction.

7. An image forming apparatus according to Claim 1, wherein a predetermined number of sequential pixels of the predetermined area are immediately preceding and succeeding the pixel in a main scanning direction.

8. An image forming apparatus according to Claim 1, wherein the predetermined area is formed with an m-by-n matrix surrounding the pixel, m and n being positive integer values greater than zero.

9. A image processing method for designating a colour converting condition for original image data received as bitmap data and colour converting said data, the image processing method comprising the steps of:
determining whether a pixel of the original image data is chromatic or achromatic;
obtaining an image property of the pixel by checking pixels in a predetermined area adjoining the pixel, the predetermined area comprising a predetermined number of sequential pixels;
designating a type of a predetermined converting condition for the pixel determined as achromatic by said determining step according to the image property obtained in said obtaining step and designating a normal converting condition using cyan magenta, yellow and black colours for the pixel determined as chromatic; and
converting the original image data into CMYK data according to the predetermined converting condition; wherein
the predetermined condition applied to the pixel determined as achromatic is any one of a K monochrome converting condition using a black colour and the normal converting condition using cyan, magenta, yellow, and black colours; and
the image property of the pixel is either one of a first image property of including any chromatic pixel in the pixels in the predetermined area and a second property of not including any chromatic pixel in the pixels in the predetermined area, and said designating step designates the normal converting condition using cyan, magenta, yellow and black colours to the pixel having the first image property, and designates the K monochrome converting condition to the pixel having the second image property.

10. A graphics data processing method according to Claim 9, wherein said chromatic checking step determines the pixel as achromatic when values of RGB colour components are identical to each other.

11. A graphics data processing method according to Claim 9, wherein said chromatic checking step determines the pixel as achromatic when differences in data value among RGB components of the pixel fall within respective predetermined threshold values.

12. A graphics data processing method according to Claim 9, wherein said obtaining step checks pixels in a predetermined area in the original image data to obtain the image property of the pixel.

13. A graphics data processing method according to Claim 9, wherein the predetermined area comprises a predetermined number of sequential pixels immediately preceding the pixel in a main scanning direction.

14. A graphics data processing method according to Claim 9, wherein the predetermined area comprises a predetermined number of sequential pixels immediately succeeding the pixel in a main scanning direction.

15. A graphics data processing method according to Claim 9, wherein the predetermined area comprises a predetermined number of sequential pixels immediately preceding and succeeding the pixel in a main scanning direction.

16. A graphics data processing method according to Claim 9, wherein the predetermined area is formed with an m-by-n matrix surrounding the pixel, m and n being positive integer values greater than zero.

17. A computer program product stored on a computer readable storage medium for causing a computer to carry out an image processing method for designating a colour converting condition for original image data received as bitmap data and colour converting said data, when run on an image processing apparatus, said method comprising the steps of:
determining whether a pixel of the original image data is chromatic or achromatic;
obtaining an image property of the pixel by checking pixels in a predetermined area adjoining the pixel, the predetermined area comprising a predetermined number of sequential pixels;
designating a type of a predetermined converting condition for the pixel determined as achromatic by said determining step according to the image property obtained in said obtaining step and designating a normal converting condition using cyan magenta, yellow and black colours for the pixel determined as chromatic; and
converting the original image data into CMYK data according to the predetermined converting condition; wherein
the predetermined condition applied to the pixel determined as achromatic is any one of a K monochrome converting condition using a black colour and the normal converting condition using cyan, magenta, yellow, and black colours; and
the image property of the pixel is either one of a first image property of including any chromatic pixel in the pixels in the predetermined area and a second property of not including any chromatic pixel in the pixels in the predetermined area, and said designating step designates the normal converting condition using cyan, magenta, yellow and black colours to the pixel having the first image property, and designates the K monochrome converting condition to the pixel having the second image property.

18. A product according to claim 17, wherein said chromatic checking step determines the pixel as achromatic when values of RGB colour components are identical to each other.

19. A product according to claim 17, wherein said chromatic checking step determines the pixel as achromatic when differences in data value among RGB components of the pixel fall within respective predetermined threshold values.

20. A product according to claim 17, wherein said obtaining step checks pixels in a predetermined area in the original image data to obtain the image property of the pixel.

21. A product according to claim 17, wherein the predetermined area comprises a predetermined number of sequential pixels immediately preceding the pixel in a main scanning direction.

22. A product according to claim 17, wherein the predetermined area comprises a predetermined number of sequential pixels immediately succeeding the pixel in a main scanning direction.

23. A product according to claim 17, wherein the predetermined area comprises a predetermined number of sequential pixels immediately preceding and succeeding the pixel in a main scanning direction.

24. A product according to claim 17, wherein the predetermined area is formed with an m-by-n matrix surrounding the pixel, m and n being positive integer values greater than zero.

25. A printing apparatus comprising:
a printer engine; and
a printer controller storing a computer program product in accordance with any one of claims 17 to 24.

26. A hosting apparatus comprising:
a computer; and
a printer driver installed in said computer and storing a computer program product in accordance with any one of claims 17 to 24.

## Patentansprüche

1. Bildverarbeitungsvorrichtung zum Festlegen einer Farbwandlungsbedingung für Originalbilddaten, die als Bitmap-Bilddaten empfangen wurden, und Farbwandeln der Daten, umfassend:
einen Farbprüfer, der dafür konfiguriert ist, zu bestimmen, ob ein Bildpunkt der Originalbilddaten farbig oder unbunt ist;
einen Erlanger, der dafür konfiguriert ist, eine Bildeigenschaft des Bildpunkts durch Prüfen von Bildpunkten in einem vorbestimmten an den Bildpunkt angrenzenden Bereich zu erlangen, wobei der vorbestimmte Bereich eine vorbestimmte Anzahl von aufeinanderfolgenden Bildpunkten umfasst;
einen Farbwandler, der dafür konfiguriert ist, die Originalbilddaten gemäß einer vorbestimmten Wandlungsbedingung in CMYK-Daten für den Druck zu wandeln; und
einen Wandlungsbedingungsfestleger, der dafür konfiguriert ist, einen Typ der vorbestimmten Wandlungsbedingung für den Bildpunkt festzulegen, der durch den Farbprüfer gemäß der durch den Erlanger erlangten Bildeigenschaft als unbunt bestimmt wird, und eine normale Wandlungsbedingung, die die Farben Zyan, Magenta, Gelb und Schwarz verwendet, festzulegen, wenn ein Bildpunkt als farbig bestimmt wird; wobei
die vorbestimmte Bedingung, die für den als unbunt bestimmten Bildpunkt verwendet wird, eine der folgenden ist: eine K-Monochromwandlungsbedingung, die eine schwarze Farbe verwendet, und die normale Wandlungsbedingung, die die Farben Zyan, Magenta, Gelb und Schwarz verwendet; und
die Bildeigenschaft des Bildpunkts entweder eine erste Bildeigenschaft des Aufweisens irgendeines farbigen Bildpunkts in den Bildpunkte in dem vorbestimmten Bereich oder eine zweite Bildeigenschaft des Aufweisens keines farbigen Bildpunkts in den Bildpunkten in dem vorbestimmten Bereich ist und der Wandlungsbedingungsfestleger dafür konfiguriert ist, die normale Wandlungsbedingung, die die Farben Zyan, Magenta, Gelb und Schwarz verwendet, für den Bildpunkt mit der ersten Bildeigenschaft und die K-Monochromwandlungsbedingung für den Bildpunkt mit der zweiten Bildeigenschaft festzulegen.

2. Bildverarbeitungsvorrichtung nach Anspruch 1, wobei der Farbprüfer den Bildpunkt als unbunt bestimmt, wenn Werte von RGB-Farbkomponenten miteinander identisch sind.

3. Bildverarbeitungsvorrichtung nach Anspruch 1, wobei der Farbprüfer den Bildpunkt als unbunt bestimmt, wenn Datenwertdifferenzen zwischen RGB-Farbkomponenten des Bildpunkts innerhalb jeweiliger vorbestimmter Schwellwerte liegen.

4. Bildverarbeitungsvorrichtung nach Anspruch 1, wobei der Erlanger Bildpunkte in einem vorbestimmten Bereich in den Originalbilddaten prüft, um die Bildeigenschaft des Bildpunkts zu erlangen.

5. Bildverarbeitungsvorrichtung nach Anspruch 1, wobei die vorbestimmte Anzahl von aufeinanderfolgenden Bildpunkten des vorbestimmten Bereichs dem Bildpunkt in einer Hauptabtastrichtung unmittelbar vorausgeht.

6. Bildverarbeitungsvorrichtung nach Anspruch 1, wobei eine vorbestimmte Anzahl von aufeinanderfolgenden Bildpunkten des vorbestimmten Bereichs dem Bildpunkt in einer Hauptabtastrichtung unmittelbar folgt.

7. Bildverarbeitungsvorrichtung nach Anspruch 1, wobei eine vorbestimmte Anzahl von aufeinanderfolgenden Bildpunkten des vorbestimmten Bereichs dem Bildpunkt in einer Hauptabtastrichtung unmittelbar vorausgeht und folgt.

8. Bildverarbeitungsvorrichtung nach Anspruch 1, wobei der vorbestimmte Bereich mit einer den Bildpunkt umgebenden m-mal-n-Matrix gebildet wird, wobei m und n positive ganzzahlige Werte größer als null sind.

9. Bildverarbeitungsverfahren zum Festlegen einer Farbwandlungsbedingung für Originalbilddaten, die als Bitmap-Bilddaten empfangen wurde, und Farbwandeln der Daten, wobei das Bildverarbeitungsverfahren die folgenden Schritte umfasst:
Bestimmen, ob ein Bildpunkt der Originalbilddaten farbig oder unbunt ist;
Erlangen einer Bildeigenschaft des Bildpunkts durch Prüfen von Bildpunkten in einem vorbestimmten an den Bildpunkt angrenzenden Bereich, wobei der vorbestimmte Bereich eine vorbestimmte Anzahl von aufeinanderfolgenden Bildpunkten umfasst;
Festlegen eines Typs einer vorbestimmten Wandlungsbedingung für den Bildpunkt, der durch den Bestimmungsschritt gemäß der im Erlangungsschritt erlangten Bildeigenschaft als unbunt bestimmt wird, und Festlegen einer normalen Wandlungsbedingung, die die Farben Zyan, Magenta, Gelb und Schwarz verwendet, für den Bildpunkt, der als farbig bestimmt wird; und
Wandeln der Originalbilddaten in CMYK-Daten gemäß der vorbestimmten Wandlungsbedingung; wobei
die vorbestimmte Bedingung, die auf den als unbunt bestimmten Bildpunkt angewendet wird, eine der folgenden ist: eine K-Monochromwandlungsbedingung, die eine schwarze Farbe verwendet, und die normale Wandlungsbedingung, die die Farben Zyan, Magenta, Gelb und Schwarz verwendet; und
die Bildeigenschaft des Bildpunkts entweder eine erste Bildeigenschaft des Aufweisens irgendeines farbigen Bildpunkts in den Bildpunkten in dem vorbestimmten Bereich oder eine zweite Bildeigenschaft des Aufweisens keines farbigen Bildpunkts in den Bildpunkten in dem vorbestimmten Bereich ist und der Festlegungsschritt die normale Wandlungsbedingung, die die Farben Zyan, Magenta, Gelb und Schwarz verwendet, für den Bildpunkt mit der ersten Bildeigenschaft festlegt und die K-Monochromwandlungsbedingung für den Bildpunkt mit der zweiten Bildeigenschaft festlegt.

10. Grafikdatenverarbeitungsverfahren nach Anspruch 9, wobei der Farbprüfschritt den Bildpunkt als unbunt bestimmt, wenn Werte von RGB-Farbkomponenten miteinander identisch sind.

11. Grafikdatenverarbeitungsverfahren nach Anspruch 9, wobei der Farbprüfschritt den Bildpunkt als unbunt bestimmt, wenn Datenwertdifferenzen zwischen RGB-Farbkomponenten des Bildpunkts innerhalb jeweiliger vorbestimmter Schwellwerte liegen.

12. Grafikdatenverarbeitungsverfahren nach Anspruch 9, wobei der Erlangungsschritt Bildpunkte in einem vorbestimmten Bereich in den Originalbilddaten prüft, um die Bildeigenschaft des Bildpunkts zu erlangen.

13. Grafikdatenverarbeitungsverfahren nach Anspruch 9, wobei der vorbestimmte Bereich eine vorbestimmte Anzahl von aufeinanderfolgenden Bildpunkten umfasst, die dem Bildpunkt in einer Hauptabtastrichtung unmittelbar vorausgehen.

14. Grafikdatenvezarbeitungsverfahren nach Anspruch 9, wobei der vorbestimmte Bereich eine vorbestimmte Anzahl von aufeinanderfolgenden Bildpunkten umfasst, die dem Bildpunkt in einer Hauptabtastrichtung unmittelbar folgen.

15. Grafikdatenverarbeitungsverfahren nach Anspruch 9, wobei der vorbestimmte Bereich eine vorbestimmte Anzahl von aufeinanderfolgenden Bildpunkten umfasst, die dem Bildpunkt in einer Hauptabtastrichtung unmittelbar vorausgehen und folgen.

16. Grafikdatenverarbeitungsverfahren nach Anspruch 9, wobei der vorbestimmte Bereich mit einer den Bildpunkt umgebenden m-mal-n-Matrix gebildet wird, wobei m und n positive ganzzahlige Werte größer als null sind.

17. Computerprogrammprodukt, das auf einem computerlesbaren Speichermedium gespeichert ist und dazu dient, einen Computer zu veranlassen, ein Bildverazbeitungsverfahren zum Festlegen einer Farbwandlungsbedingung für Originalbilddaten, die als Bitmap-Bilddaten empfangen wurden, und Farbwandeln der Daten auszuführen, wenn es auf einer Bildverarbeitungsvorrichtung läuft, wobei das Verfahren die folgenden Schritte umfasst:
Bestimmen, ob ein Bildpunkt der Originalbilddaten farbig oder unbunt ist;
Erlangen einer Bildeigenschaft des Bildpunkts durch Prüfen von Bildpunkten in einem vorbestimmten an den Bildpunkt angrenzenden Bereich, wobei der vorbestimmte Bereich eine vorbestimmte Anzahl von aufeinanderfolgenden Bildpunkten umfasst;
Festlegen eines Typs einer vorbestimmten Wandlungsbedingung für den Bildpunkt, der durch den Bestimnungsschritt gemäß der im Erlangungsschritt erlangten Bildeigenschaft als unbunt bestimmt wird, und Festlegen einer normalen Wandlungsbedingung, die die Farben Zyan, Magenta, Gelb und Schwarz verwendet, für den Bildpunkt, der als farbig bestimmt wird; und
Wandeln der Originalbilddaten in CMYK-Daten gemäß der vorbestimmten Wandlungsbedingung; wobei
die vorbestimmte Bedingung, die auf den als unbunt bestimmten Bildpunkt angewendet wird, eine der folgenden ist: eine K-Monochromwandlungsbedingung, die eine schwarze Farbe verwendet, und die normale Wandlungsbedingung, die die Farben Zyan, Magenta, Gelb und Schwarz verwendet; und
die Bildeigenschaft des Bildpunkts entweder eine erste Bildeigenschaft des Aufweisens irgendeines farbigen Bildpunkts in den Bildpunkten in dem vorbestimmten Bereich oder eine zweite Bildeigenschaft des Aufweisens keines farbigen Bildpunkts in den Bildpunkten in dem vorbestimmten Bereich ist und der Festlegungsschritt die normale Wandlungsbedingung, die die Farben Zyan, Magenta, Gelb und Schwarz verwendet, für den Bildpunkt mit der ersten Bildeigenschaft festlegt und die K-Monochromwandlungsbedingung für den Bildpunkt mit der zweiten Bildeigenschaft festlegt.

18. Produkt nach Anspruch 17, wobei der Farbprüfschritt den Bildpunkt als unbunt bestimmt, wenn Werte von RGB-Farbkomponenten miteinander identisch sind.

19. Produkt nach Anspruch 17, wobei der Farbprüfschritt den Bildpunkt als unbunt bestimmt, wenn Datenwertdifferenzen zwischen RGB-Farbkomponenten des Bildpunkts innerhalb jeweiliger vorbestimmter Schwellwerte liegen.

20. Produkt nach Anspruch 17, wobei der Erlangungsschritt Bildpunkte in einem vorbestimmten Bereich in den Originalbilddaten prüft, um die Bildeigenschaft des Bildpunkts zu erlangen.

21. Produkt nach Anspruch 17, wobei der vorbestimmte Bereich eine vorbestimmte Anzahl von aufeinanderfolgenden Bildpunkte umfasst, die dem Bildpunkt in einer Hauptabtastrichtung unmittelbar vorausgehen.

22. Produkt nach Anspruch 17, wobei der vorbestimmte Bereich eine vorbestimmte Anzahl von aufeinanderfolgenden Bildpunkten umfasst, die dem Bildpunkt in einer Hauptabtastrichtung unmittelbar folgen.

23. Produkt nach Anspruch 17, wobei der vorbestimmte Bereich eine vorbestimmte Anzahl von aufeinanderfolgenden Bildpunkten umfasst, die dem Bildpunkt in einer Hauptabtastrichtung unmittelbar vorausgehen und folgen.

24. Produkt nach Anspruch 17, wobei der vorbestimmte Bereich mit einer den Bildpunkt umgebenden m-mal-n-Matrix gebildet wird, wobei m und n positive ganzzahlige Werte größer als null sind.

25. Druckvorrichtung, umfassend:
ein Druckwerk; und
einen Druckercontroller, der ein Computerprogrammprodukt nach einem der Ansprüche 17 bis 24 speichert.

26. Hosting-Vorrichtung, umfassend:
einen Computer; und
einen Druckertreiber, der in dem Computer installiert ist und ein Computerprogrammprodukt nach einem der Ansprüche 17 bis 24 speichert.

## Revendications

1. Dispositif de traitement d'image pour désigner une condition de conversion de couleur pour des données d'image d'origine reçues en tant que données d'image de bitmap et pour convertir la couleur desdites données, comprenant :
un dispositif de test chromatique configuré pour déterminer si un pixel des données d'image d'origine est chromatique ou achromatique ;
un dispositif d'obtention configuré pour obtenir une propriété d'image du pixel en vérifiant des pixels dans une zone prédéterminée contiguë au pixel, la zone prédéterminée comprenant un nombre prédéterminé de pixels séquentiels ;
un convertisseur de couleur configuré pour convertir les données d'image d'origine en des données CMYK pour une impression conformément à une condition de conversion prédéterminée ; et
un désignateur de condition de conversion configuré pour désigner un type de la condition de conversion prédéterminée pour le pixel déterminé comme étant achromatique par ledit dispositif de test chromatique conformément à la propriété d'image obtenue par ledit dispositif d'obtention et pour désigner une condition de conversion normale utilisant des couleurs cyan, magenta, jaune et noire si un pixel est déterminé comme étant chromatique ; dans lequel
la condition prédéterminée utilisée pour le pixel déterminé comme étant achromatique est l'une quelconque d'une condition de conversion monochrome noire utilisant une couleur noire et de la condition de conversion normale utilisant des couleurs cyan, magenta, jaune et noire ; et
la propriété d'image du pixel est l'une ou l'autre d'une première propriété d'image consistant à inclure un pixel chromatique quelconque dans les pixels dans la zone prédéterminée et d'une deuxième propriété consistant à ne pas inclure un pixel chromatique quelconque dans les pixels dans la zone prédéterminée, et ledit désignateur de condition de conversion est configuré pour désigner la condition de conversion normale utilisant des couleurs cyan, magenta, jaune et noire pour le pixel ayant la première propriété d'image et la condition de conversion monochrome noire pour le pixel ayant la deuxième propriété d'image.

2. Dispositif de traitement d'image selon la revendication 1, dans lequel ledit dispositif de test chromatique détermine que le pixel est achromatique lorsque les valeurs des composantes de couleur RVB sont identiques les unes aux autres.

3. Dispositif de traitement d'image selon la revendication 1, dans lequel ledit dispositif de test chromatique détermine que le pixel est achromatique lorsque les différences d'une valeur de données parmi les composantes RVB du pixel tombent dans les limites de valeurs de seuil prédéterminées respectives.

4. Dispositif de formation d'image selon la revendication 1, dans lequel ledit dispositif d'obtention vérifie les pixels dans une zone prédéterminée dans les données d'image d'origine pour obtenir la propriété d'image du pixel.

5. Dispositif de formation d'image selon la revendication 1, dans lequel le nombre prédéterminé de pixels séquentiels de la zone prédéterminée précèdent immédiatement le pixel dans une direction de balayage principal.

6. Dispositif de formation d'image selon la revendication 1, dans lequel un nombre prédéterminé de pixels séquentiels de la zone prédéterminée suivent immédiatement le pixel dans une direction de balayage principal.

7. Dispositif de formation d'image selon la revendication 1, dans lequel un nombre prédéterminé de pixels séquentiels de la zone prédéterminée précèdent et suivent immédiatement le pixel dans une direction de balayage principal.

8. Dispositif de formation d'image selon la revendication 1, dans lequel la zone prédéterminée est formée par une matrice m par n entourant le pixel, m et n étant des valeurs entières positives supérieures à zéro.

9. Procédé de traitement d'image pour désigner une condition de conversion de couleur pour des données d'image d'origine reçues en tant que données de bitmap et convertir la couleur desdites données, le procédé de traitement d'image comprenant les étapes consistant à :
déterminer si un pixel des données d'image d'origine est chromatique ou achromatique ;
obtenir une propriété d'image du pixel en vérifiant les pixels dans une zone prédéterminée contiguë au pixel, la zone prédéterminée comprenant un nombre prédéterminé de pixels séquentiels ;
désigner un type d'une condition de conversion prédéterminée pour le pixel déterminé comme étant achromatique par ladite étape de détermination conformément à la propriété d'image obtenue à ladite étape d'obtention et désigner une condition de conversion normale utilisant des couleurs cyan, magenta, jaune et noire pour le pixel déterminé comme étant chromatique ; et
convertir les données d'image d'origine en données CMYK conformément à la condition de conversion prédéterminée ; dans lequel
la condition prédéterminée appliquée au pixel qui est déterminé comme étant achromatique est l'une quelconque d'une condition de conversion monochrome noire utilisant une couleur noire et de la condition de conversion normale utilisant des couleurs cyan, magenta, jaune et noire ; et
la propriété d'image du pixel est l'une ou l'autre d'une première propriété d'image consistant à inclure un pixel chromatique quelconque dans les pixels dans la zone prédéterminée et d'une deuxième propriété consistant à ne pas inclure un pixel chromatique quelconque dans les pixels dans la zone prédéterminée, et ladite étape de désignation désigne la condition de conversion normale utilisant des couleurs cyan, magenta, jaune et noire pour le pixel ayant la première propriété d'image, et désigne une condition de conversion monochrome noire pour le pixel ayant la deuxième propriété d'image.

10. Procédé de traitement de données graphiques selon la revendication 9, dans lequel ladite étape de vérification chromatique détermine que le pixel est achromatique lorsque les valeurs des composantes de couleur RVB sont identiques les unes aux autres.

11. Procédé de traitement de données graphiques selon la revendication 9, dans lequel ladite étape de vérification chromatique détermine que le pixel est achromatique lorsque les différences d'une valeur de données parmi les composants RVB du pixel tombent dans les limites de valeurs de seuil prédéterminées respectives.

12. Procédé de traitement de données graphiques selon la revendication 9, dans lequel ladite étape d'obtention vérifie les pixels dans une zone prédéterminée dans les données d'image d'origine pour obtenir la propriété d'image du pixel.

13. Procédé de traitement de données graphiques selon la revendication 9, dans lequel la zone prédéterminée comprend un nombre prédéterminé de pixels séquentiels immédiatement avant le pixel dans une direction de balayage principal.

14. Procédé de traitement de données graphiques selon la revendication 9, dans lequel la zone prédéterminée comprend un nombre prédéterminé de pixels séquentiels immédiatement à la suite du pixel dans une direction de balayage principal.

15. Procédé de traitement de données graphiques selon la revendication 9, dans lequel la zone prédéterminée comprend un nombre prédéterminé de pixels séquentiels immédiatement avant et après le pixel dans une direction de balayage principal.

16. Procédé de traitement de données graphiques selon la revendication 9, dans lequel la zone prédéterminée est formée par une matrice m par n entourant le pixel, m et n étant des valeurs entières positives supérieures à zéro.

17. Produit-programme d'ordinateur mémorisé sur un support de mémorisation pouvant être lu par un ordinateur pour amener un ordinateur à effectuer un procédé de traitement d'image pour désigner une condition de conversion de couleur pour des données d'image d'origine reçues en tant que données de bitmap et convertir la couleur desdites données, lorsqu'il est exécuté sur un dispositif de traitement d'image, ledit procédé comprenant les étapes consistant à :
déterminer si un pixel des données d'image d'origine est chromatique ou achromatique ;
obtenir une propriété d'image du pixel en vérifiant les pixels dans une zone prédéterminée contiguë au pixel, la zone prédéterminée comprenant un nombre prédéterminé de pixels séquentiels ;
désigner un type d'une condition de conversion prédéterminée pour le pixel déterminé comme étant achromatique par ladite étape de détermination conformément à la propriété d'image obtenue à ladite étape d'obtention et désigner une condition de conversion normale utilisant des couleurs cyan, magenta, jaune et noire pour le pixel déterminé comme étant chromatique ; et
convertir les données d'image d'origine en données CMYK conformément à la condition de conversion prédéterminée ; dans lequel
la condition prédéterminée appliquée au pixel déterminé comme étant achromatique est l'une quelconque d'une condition de conversion monochrome noire utilisant une couleur noire et de la condition de conversion normale utilisant des couleurs cyan, magenta, jaune et noire ; et
la propriété d'image du pixel est l'une ou l'autre d'une première propriété d'image consistant à inclure un pixel chromatique quelconque dans les pixels dans la zone prédéterminée et d'une deuxième propriété consistant à ne pas inclure un pixel chromatique quelconque dans les pixels dans la zone prédéterminée, et ladite étape de désignation désigne la condition de conversion normale utilisant des couleurs cyan, magenta, jaune et noire pour le pixel ayant la première propriété d'image, et désigne la condition de conversion monochrome noire pour le pixel ayant la deuxième propriété d'image.

18. Produit selon la revendication 17, dans lequel ladite étape de vérification chromatique détermine que le pixel est achromatique lorsque les valeurs des composantes de couleur RVB sont identiques les unes aux autres.

19. Produit selon la revendication 17, dans lequel ladite étape de vérification chromatique détermine que le pixel est achromatique lorsque les différences d'une valeur de données parmi les composants RVB du pixel tombent dans les limites de valeurs de seuil prédéterminées respectives.

20. Produit selon la revendication 17, dans lequel ladite étape d'obtention vérifie les pixels dans une zone prédéterminée dans les données d'image d'origine pour obtenir la propriété d'image du pixel.

21. Produit selon la revendication 17, dans lequel la zone prédéterminée comprend un nombre prédéterminé de pixels séquentiels immédiatement avant le pixel dans une direction de balayage principal.

22. Produit selon la revendication 17, dans lequel la zone prédéterminée comprend un nombre prédéterminé de pixels séquentiels immédiatement après le pixel dans une direction de balayage principal.

23. Produit selon la revendication 17, dans lequel la zone prédéterminée comprend un nombre prédéterminé de pixels séquentiels immédiatement avant et après le pixel dans une direction de balayage principal.

24. Produit selon la revendication 17, dans lequel la zone prédéterminée est formée par une matrice m par n entourant le pixel, m et n étant des valeurs entières positives supérieures à zéro.

25. Appareil d'impression comprenant :
un moteur d'imprimante ; et
un contrôleur d'imprimante mémorisant un produit-programme d'ordinateur selon l'une quelconque des revendications 17 à 24.

26. Appareil d'hébergement comprenant :
un ordinateur, et
un pilote d'imprimante installé dans ledit ordinateur et mémorisant un produit-programme d'ordinateur selon l'une quelconque des revendications 17 à 24.
